# EUROPEAN PATENT APPLICATION

(11) **EP 4 607 719 A1**
(43) Date of publication of application: **27.08.2025**
(21) Application number: 23870446.4
(22) Date of filing: 18.09.2023
(51) Int. Cl.: H01R 25/16, H02K 11/33

(54) **BUSBAR, MOTOR CONTROLLER ASSEMBLY, AND ELECTRIC DRIVE ASSEMBLY SYSTEM**

(30) Priority: 30.09.2022 CN 202222610530 U
(71) Applicant: Valeo Power Technology (Nanjing) Co., Ltd., Nanjing, Jiangsu 211153 (CN)
(72) Inventor: FU, Xianguo, Suzhou, Jiangsu 215500 (CN); FU, Yiqi, Suzhou, Jiangsu 215500 (CN); YE, Ziping, Suzhou, Jiangsu 215500 (CN); ZHANG, Jiafeng, Suzhou, Jiangsu 215500 (CN); CHEN, Qingfeng, Suzhou, Jiangsu 215500 (CN); HU, Xiaobin, Suzhou, Jiangsu 215500 (CN)
(74) Representative: Valeo Powertrain Systems
(86) International application number: PCT/CN2023/119427
(87) International publication number: WO 2024/067212

(57) **Abstract**

The present disclosure provides a busbar, a motor controller assembly, and an electric drive assembly system. The busbar is used for electrically connecting a motor controller to a motor and includes: a first rigid joint (10) electrically connected to a corresponding output pin (16) of the motor controller, a second rigid joint (13) electrically connected to a corresponding input pin (17) of the motor, and a flat flexible strap (12) located between the first rigid joint (10) and the second rigid joint (13), wherein the flat flexible strap (12) is formed of multiple stacked metal sheets.

## Description

### Technical Field

The present disclosure relates to a busbar, a motor controller assembly and an electric drive assembly system.

### Background Art

As vehicles gradually develop, the space inside them is becoming more and more compact. As important motive power systems of vehicles, electric drive assembly systems are subject to ever more demanding requirements with regard to weight reduction, size reduction, integration and cost reduction. An electric drive assembly system mainly comprises an electric motor, a motor controller assembly and a gearbox, etc., wherein the motor controller assembly provides electric power conversion and battery charging/discharging functions. The motor controller assembly is generally connected to the electric motor by a busbar. Driven by the need for weight reduction, size reduction and integration, the space used for installing the busbar is increasingly restricted.

In some applications, the size (e.g. the width) of an installation port for the busbar of the motor controller assembly is very small; for example, it is a square, deep hole that is only a little over ten millimetres in width. As a result, it is not possible to for a common L-shaped busbar to pass through it for the purposes of installation.

One known solution is to use a split busbar design; that is, two mutually perpendicular straight busbars are used to form the required L-shaped busbar. However, such a design requires an additional screw to install the two perpendicular busbars, and this additional screw will heat up during operation, resulting in power loss. Furthermore, the additional screw also needs space for installation, and this hinders progress in weight reduction, size reduction and integration of electric drive assembly systems.

Another known solution is to use a busbar in the form of a cable. However, the wiring terminals of busbars of this type are generally large in size, so a large installation space is still needed. Specifically, the size of a wiring terminal of a busbar in the form of a cable is greater than the abovementioned width of a little over ten millimetres, so the busbar cannot be successfully installed.

Thus, there is a need in the art for a busbar capable of solving the abovementioned problem.

### Summary

Thus, an objective of the present disclosure is to provide a busbar, a motor controller assembly and an electric drive assembly system, the busbar having a flat flexible part which can be adjusted in the process of installation, suitable for a narrow installation port and preventing motor vibration from affecting components in the motor controller assembly, and achieving greater current-carrying capacity, insulation protection functionality and maximum versatility.

The abovementioned object is achieved through the busbar, motor controller assembly and electric drive assembly system described below.

In one aspect, the present disclosure provides a busbar for electrically connecting a motor controller to an electric motor, wherein the busbar comprises: a first rigid connector electrically connected to a corresponding output pin of the motor controller, a second rigid connector electrically connected to a corresponding input pin of the electric motor, and a flat flexible strap located between the first rigid connector and the second rigid connector, wherein the flat flexible strap is formed of multiple stacked metal sheets.

In an embodiment, the flat flexible strap is located in a channel from the output pin to the input pin, and a length of the busbar is greater than a length of the channel so that the flat flexible strap forms at least one bent part.

In an embodiment, one of the at least one bent part is located in a bent segment of the channel.

In an embodiment, one of the at least one bent part is located in a straight segment of the channel.

In an embodiment, the metal sheet is a copper sheet.

In an embodiment, the multiple metal sheets are connected to each other by welding.

In an embodiment, the first rigid connector and the second rigid connector are connected to the flat flexible strap by welding, or the first rigid connector and the second rigid connector are formed integrally with the flat flexible strap from multiple stacked metal sheets, the first rigid connector and the second rigid connector being formed by welding two ends of the multiple metal sheets.

In an embodiment, the first rigid connector and the second rigid connector are electrically connected by screws or welding to the output pin and the input pin respectively.

In an embodiment, the busbar further comprises an insulating part, configured to at least partially cover the flat flexible strap.

In an embodiment, the insulating part is an insulating sleeve.

In an embodiment, the insulating part is formed by potting adhesive.

In another aspect, the present disclosure provides a motor controller assembly, comprising a busbar as described above and a motor controller.

In an embodiment, the motor controller is an inverter.

In another aspect, the present disclosure provides an electric drive assembly system, comprising a motor controller assembly as described above and an electric motor.

### Brief Description of the Drawings

In order to explain the technical solution in embodiments of the present disclosure more clearly, the drawings accompanying embodiments of the present disclosure are briefly described below. The drawings are merely used to illustrate some embodiments of the present disclosure, without limiting all embodiments of the present disclosure to this. In the drawings:
Fig. 1 is a schematic drawing of part of a motor controller assembly for an electric drive assembly system according to an embodiment of the present disclosure.
Fig. 2 is a schematic sectional drawing of part of a motor controller assembly for an electric drive assembly system according to an embodiment of the present disclosure.
Fig. 3 is a perspective drawing of a busbar of a motor controller assembly for an electric drive assembly system according to an embodiment of the present disclosure.
Fig. 4 is a schematic drawing of part of a busbar of a motor controller assembly for an electric drive assembly system according to an embodiment of the present disclosure.
Fig. 5 is a schematic drawing of part of a busbar of a motor controller assembly for an electric drive assembly system according to an embodiment of the present disclosure.
Figs. 6a and 6b are perspective drawings of different states of a busbar of a motor controller assembly for an electric drive assembly system according to an embodiment of the present disclosure.
Fig. 7 is a schematic drawing of part of a motor controller assembly for an electric drive assembly system according to another embodiment of the present disclosure.

### Detailed Description of Embodiments

In order to clarify the technical solution and its objective and advantages of the present disclosure, the technical solutions of embodiments of the present disclosure are described clearly and completely below in conjunction with the drawings of particular embodiments of the present disclosure. In the drawings, identical reference numerals denote identical components. It must be explained that the embodiments described are some, not all, of the embodiments of the present disclosure. All other embodiments obtained by those skilled in the art based on the described embodiments of the present disclosure without the need for inventive effort shall fall within the scope of protection of the present disclosure.

Unless otherwise defined, the technical or scientific terms used herein shall have the common meanings understood by those skilled in the art. The words "first", "second", and the like used in the description and claims of the patent application disclosed herein do not indicate any order, quantity or importance, being merely used to distinguish different component parts. Likewise, words such as "a" or "one" do not necessarily represent a quantity limit. Words such as "comprising", "including" or "having" mean that the element or object preceding the word covers the elements or objects listed after the word and equivalents thereof, without excluding other elements or objects. Words such as "connection" or "communication", rather than being limited to the physical or mechanical connection or communication shown in a drawing, may comprise connection or communication equivalent thereto, irrespective of whether it is direct or indirect. The terms "upper", "lower", "left", "right" and the like are only used to indicate a relative positional relationship, and when the absolute position of a described object changes, the relative positional relationship may also change accordingly.

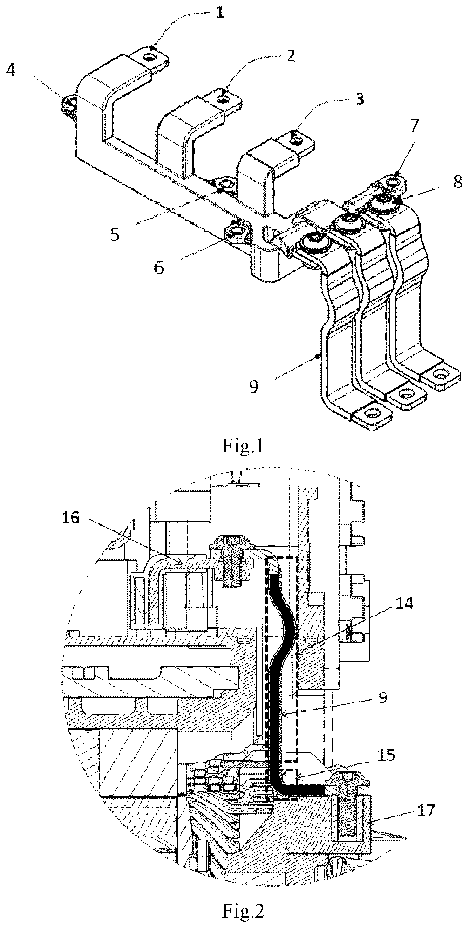

Various embodiments of the present disclosure are described in detail below with reference to Figs. 1 - 7.

The electric drive assembly system according to an embodiment of the present disclosure comprises a motor controller assembly, an electric motor and a gearbox. The motor controller assembly comprises the busbar 9 as shown in Fig. 1 and the motor controller not shown in Fig. 1, etc. For example, the motor controller may be an inverter, which converts DC to fixed-frequency, fixed-voltage AC or variable-frequency, variable-voltage AC, for input to the electric motor. The electric motor is, for example, a permanent magnet synchronous motor or an AC asynchronous motor. The electric motor is drive-connected to the gearbox, so as to output electric motor torque after speed reduction in the gearbox. By having apparatuses such as the electric motor, gearbox and motor controller assembly installed in a single housing, existing electric drive assembly systems realize a design in which the electric drive assembly system is highly integrated, thereby saving space, and thus meeting the requirement for weight reduction, size reduction, integration and cost reduction.

As shown in Figs. 1 - 2, the busbar 9 is used to electrically connect the motor controller to the electric motor, having one end connected to a corresponding output pin 16 of the motor controller, and another end connected to a corresponding input pin 17 of the electric motor, e.g. securely connected by screws 8. For example, the motor controller assembly may comprise three busbars 9, which are respectively used for three-phase electricity.

In addition, the motor controller assembly or its electric connection main body other than the motor controller and the busbar may comprise pins 1, 2 and 3. The three busbars 9 are respectively connected via these three pins to the motor controller, more specifically to an IGBT (insulated gate bipolar transistor) module in the inverter. Sensors are respectively provided on pins 1, 2 and 3, for example in the centre of each pin, to measure current flowing through the pin. In addition, flux concentrators are also respectively provided on the pins 1, 2 and 3, for the purpose of concentrating the magnetic field in the centre of the pin, for measurement by the sensor. In this way, the influence of external stray magnetic fields from parasitic sources can be reduced, to ensure current measurement functionality. The pins 1, 2 and 3 are connected to the respective busbars 9 via electrical connectors, which are enclosed in insulators; fixing members 4, 5, 6 and 7 are provided on the insulators, and are for example holes, so as to be fixed by screws to a housing of the electric drive assembly system. The insulators may be made of insulating plastic.

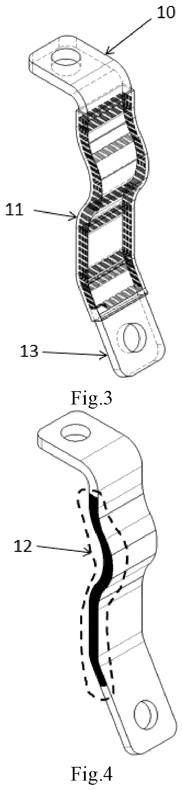

As shown in Figs. 3 and 4, the busbar 9 comprises: a first rigid connector 10 electrically connected to a corresponding output pin 16 of the motor controller; a second rigid connector 13 electrically connected to a corresponding input pin 17 of the electric motor; and a flat flexible strap 12 located between the first rigid connector 10 and the second rigid connector 13. The flat flexible strap 12 is formed of multiple stacked metal sheets, and is thus able to deform and bend. For example, the metal sheets are copper sheets, and may be about 0.05 mm thick. Solder may be provided between the multiple metal sheets. Preferably, the multiple metal sheets are connected to each other by welding, for example by brazing. The structure described above enables the busbar of the present disclosure to be adjusted, e.g. bent, during installation, so that the busbar is suitable for narrow installation ports. In addition, the busbar of the present disclosure can achieve greater current-carrying capacity, and can even achieve an AC skin effect.

As shown in Fig. 3, the busbar 9 may also comprise an insulating part 11, configured to at least partially cover the flat flexible strap 12. Preferably, the insulating part 11 is an insulating sleeve, made of plastic or plastisol for example. The insulating sleeve is fitted round the flat flexible strap 12, and for example completely covers the flat flexible strap 12. Alternatively, the insulating part 11 may be formed by potting adhesive. In this way, the busbar of the present disclosure may have an insulation protection function.

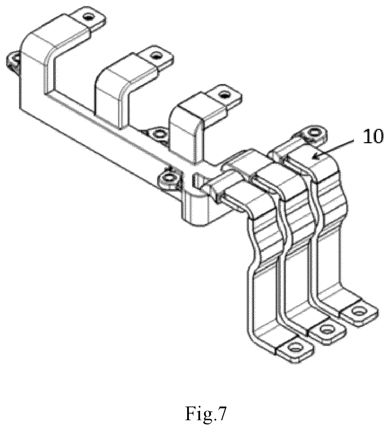

As stated above, the first rigid connector 10 and the second rigid connector 13 are electrically connected by screws 8 to the output pin 16 and the input pin 17 respectively, as shown in Figs. 1 and 2. In other examples, as shown in Fig. 7, the first rigid connector 10 is electrically connected to the output pin 16 by welding, for example by resistance welding, etc. Of course, the second rigid connector 13 may also be electrically connected to the input pin 17 by welding.

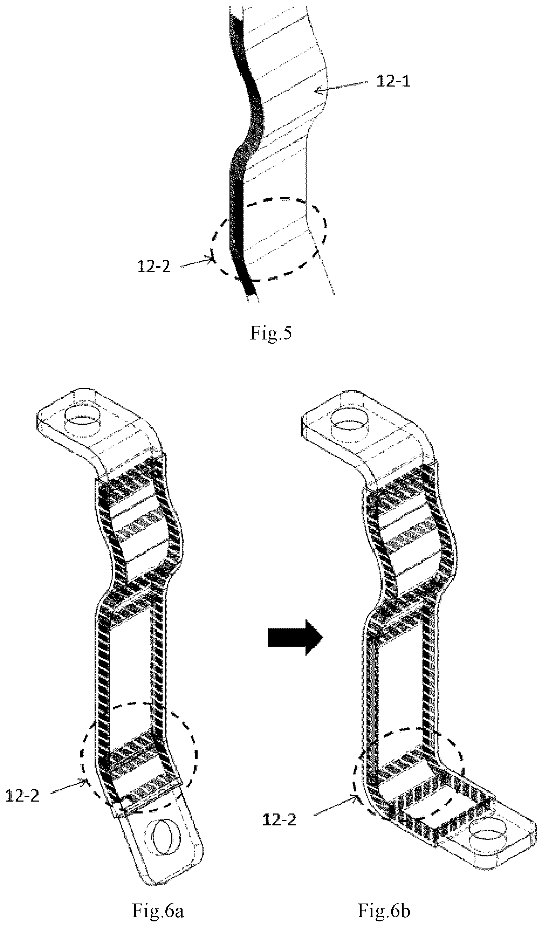

Referring to Fig. 2, the flat flexible strap 12 is located in a channel from the corresponding output pin 16 of the motor controller to the corresponding input pin 17 of the electric motor, and the length of the busbar 9 is greater than the length of the channel so that the flat flexible strap 12 forms at least one bent part 12-1, 12-2, as shown in Fig. 5. The "channel" mentioned herein refers to the space for installing busbars that extends from the corresponding output pin 16 of the motor controller to the corresponding input pin 17 of the electric motor. In Fig. 2, the channel is a channel that extends horizontally to the right from the output pin 16, then vertically downwards and then horizontally to the right; that is to say, the channel comprises a vertical segment, two horizontal segments, and bent segments therebetween, and the length of the channel is the sum of the lengths of these segments, i.e. the sum of the vertical extent and the horizontal extent. The length of the busbar 9 being greater than the length of the channel implies that the bent parts of the busbar are always within the channel. One bent part 12-1 of the at least one bent part is located in a straight segment 14 of the channel (as indicated by the rectangular dotted-line box in the middle of Fig. 2), i.e. in the vertical segment thereof, and the bent part 12-1 is an arc-shaped structure. Of course, there could also be multiple bent parts 12-1 arranged in the straight segment 14 of the channel. Another bent part 12-2 is located in a bent segment 15 of the channel (as indicated by the rectangular dotted-line box in the lower part of Fig. 2).

By providing the bent part in the straight segment of the channel, it is possible to prevent motor-side vibration from being transmitted to the motor controller assembly, in particular to vibration-sensitive components therein such as IGBTs. The bent part 12-1 located in the straight segment of the channel has the effects of damping and vibration reduction through deformation compensation.

As shown in Fig. 6a, before passing through the abovementioned channel so as to be connected to the corresponding input pin 17 of the electric motor, the busbar 9 has a substantially straight form or is slightly bent, e.g. the bent part 12-2 forms a large obtuse angle, to facilitate passage through the channel. As shown in Fig. 6b, after the busbar 9 passes through the straight segment 14 of the abovementioned channel, due to the fact that the flat flexible strap 12 is formed of multiple stacked thin metal sheets and is thus adjustable, a part of the flat flexible strap 12 that is close to the second rigid connector 13 bends according to the bent segment 15 of the channel to form the bent part 12-2, and for example forms an angle of about 90°. In this way, the busbar of the present disclosure is suitable for different installation environments, and is thus highly flexible.

By means of the flat flexible part with the bent parts as described above, it is only necessary to replace the busbar to meet the electric motor interfaces of different customers, while keeping the electric connection main body of the motor controller assembly unchanged, achieving maximum component versatility.

In some examples, the first rigid connector 10 and the second rigid connector 13 may be connected to the flat flexible strap 12 by welding. In another example, the first rigid connector 10 and the second rigid connector 13 are formed integrally with the flat flexible strap 12 from multiple stacked metal sheets, and the first rigid connector 10 and the second rigid connector 13 are formed by welding two ends of the multiple metal sheets. Specifically, the first rigid connector 10 and the second rigid connector 13 are formed by welding between layers at the two ends of the multiple metal sheets.

By setting the flat flexible part, the busbar of the present disclosure can be adjusted during installation, so that the busbar is suitable for narrow installation ports. In addition, by setting the bent parts, the busbar of the present disclosure can prevent motor vibration from affecting the components inside the motor controller assembly, i.e. the busbar has a vibration shielding function. By stacking multiple metal sheets to form the flat flexible part, the busbar of the present disclosure can achieve greater current-carrying capacity, and can even achieve AC skin effect. By setting the insulating part, the busbar of the present disclosure can have an insulation protection function. In summary, the busbar of the present disclosure can ensure adjustability during assembly, feasibility of small-space assembly, and current sensor integration.

The technical features disclosed above are not limited to the disclosed combinations with other features, and those skilled in the art could make other combinations of technical features according to the objective of the invention, to achieve the objective of the present disclosure.

## Claims

1. A busbar (9) for electrically connecting a motor controller to an electric motor, **characterized in that** the busbar comprises:
a first rigid connector (10) electrically connected to a corresponding output pin (16) of the motor controller,
a second rigid connector (13) electrically connected to a corresponding input pin (17) of the electric motor, and
a flat flexible strap (12) located between the first rigid connector (10) and the second rigid connector (13),
wherein the flat flexible strap (12) is formed of multiple stacked metal sheets.

2. The busbar according to claim 1, **characterized in that** the flat flexible strap (12) is located in a channel from the output pin to the input pin, and a length of the busbar (9) is greater than a length of the channel so that the flat flexible strap (12) forms at least one bent part (12-1, 12-2).

3. The busbar according to claim 2, **characterized in that** one of the at least one bent part is located in a bent segment (15) of the channel.

4. The busbar according to claim 2, **characterized in that** one of the at least one bent part is located in a straight segment (14) of the channel.

5. The busbar according to claim 1, **characterized in that** the metal sheet is a copper sheet.

6. The busbar according to claim 1, **characterized in that** the multiple metal sheets are connected to each other by welding.

7. The busbar according to claim 1, **characterized in that** the first rigid connector (10) and the second rigid connector (13) are connected to the flat flexible strap (12) by welding, or
the first rigid connector (10) and the second rigid connector (13) are formed integrally with the flat flexible strap (12) from multiple stacked metal sheets, and the first rigid connector (10) and the second rigid connector (13) are formed by welding two ends of the multiple metal sheets.

8. The busbar according to claim 1, **characterized in that** the first rigid connector (10) and the second rigid connector (13) are electrically connected by screws (8) or welding to the output pin (16) and the input pin (17) respectively.

9. The busbar according to claim 1, **characterized in that** the busbar (9) further comprises an insulating part (11), the insulating part is configured to at least partially cover the flat flexible strap (12).

10. The busbar according to claim 9, **characterized in that** the insulating part (11) is an insulating sleeve.

11. The busbar according to claim 9, **characterized in that** the insulating part (11) is formed by potting adhesive.

12. A motor controller assembly, **characterized in that** the motor controller assembly comprises the busbar (9) according to any one of claims 1 - 11 and a motor controller.

13. The motor controller assembly according to claim 12, **characterized in that** the motor controller is an inverter.

14. An electric drive assembly system, **characterized in that** the electric drive assembly system comprises the motor controller assembly according to claim 12 or 13 and an electric motor.
